# EUROPÄISCHE PATENTSCHRIFT

(11) **EP 1 959 213 B1**
(45) Veröffentlichungstag und Bekanntmachung des Hinweises auf die Patenterteilung: **28.10.2009**
(21) Anmeldenummer: 08033510.2
(22) Anmeldetag: 02.02.2008
(51) Int. Cl.: F24J 3/08

(54) **Verfahren zur Bestimmung vertikaler Variationen der Wärmeleitfähigkeit**
Method for determining vertical variations in warmth conduction capacity
Procédé de détermination de variations verticales de la conductivité thermique

(30) Priorität: 17.02.2007 DE 102007008039
(43) Veröffentlichungstag der Anmeldung: 20.08.2008
(73) Patentinhaber: Geowatt AG, 8050 Zürich (CH)
(72) Erfinder: Rohner, Ernst, CH-9212 Arnegg. (CH); Wagner, Roland, 8057 Zürich (CH)
(74) Vertreter: Hansen, Jochen

(56) Entgegenhaltungen:
- DE-B3-102004 026 381
- JP-A- 2003 004 680
- BURKHARD SANNER ET AL: "Thermal Response Test-Current Status and World-Wide Application" 29. April 2005 (2005-04-29), PROCEEDINGS WORLD GEOTHERMAL CONGRESS 2005, ANTALYA TURKEY,24-29 APTIL 2005 , XP002482260 * Zusammenfassung *

## Beschreibung

Die Erfindung betrifft ein Verfahren zur Bestimmung vertikaler Variationen der Wärmeleitfähigkeit im Untergrund in Bohrungen, insbesondere in Erdwärmesonden.

Es ist bekannt, über sog. Erdwärmesonden, die in im Wesentlichen senkrechten Bohrungen im Untergrund installiert werden, Wärme dem Untergrund für Heizzwecke zu entziehen bzw. Wärme an den Untergrund zur Kühlung abzugeben. Derartige Systeme haben den Vorteil, dass die Erdwärme im hier zu betrachtenden Umfang als "unerschöpflich" anzusehen ist. Die wirtschaftliche Ausnutzbarkeit der Erdwärme ist jedoch von der Wärmeleitfähigkeit des Untergrundes entscheidend abhängig. Nur bei ausreichender Wärmeleitfähigkeit kann eine Erdwärmesonde eine für ihren Einsatzzweck erforderliche Wärmemenge dem Untergrund entziehen. Es ist daher äußerst wichtig, möglichst genaue Informationen über die Wärmeleitfähigkeit des Untergrundes zu erhalten. Dabei sind auch vertikale Variationen der Wärmeleitfähigkeit und/oder Variationen durch advektiven Wärmetransport durch Grundwasserströmung zu erfassen.

Da die in den Untergrund eingebrachten Bohrungen für die Erdwärmesonden der größte Kostenfaktor einer derartigen Erdwärmeanlage ist, sollten gerade die Erdbohrungen möglichst kostengünstig erstellt werden. Entsprechend sind Messungen in offenen Bohrungen bzw. in verrohrten Bohrungen nicht wirtschaftlich darstellbar. Entsprechend werden die im Stand der Technik bekannten Bohrlochwärmetauschersysteme in Form von U-förmigen Erdwärmesonden sogleich nach Fertigstellung des niedergebrachten Bohrlochs eingeführt und der freie Platz im Bohrloch von unten nach oben mit Füllmaterial verfüllt. Beispielsweise ist von der Firma Haka Gerodur AG, Mooswiesstraße 67, CH-9200 Gossau, SG ein Doppel-U-Rohr-Bohrlochwärmetauscher als sog. Erdwärmesonde bekannt.

Für die Auslegung derartiger Wärmetauscher zum Speichern von thermischer Energie im Untergrund oder als Erdwärmequelle für Wärmepumpen ist somit die Kenntnis über die thermischen Eigenschaften des Untergrundes besonders wichtig. Eine ganz entscheidende Größe spielt dabei die Wärmeleitfähigkeit des Untergrundes für den Wärmeaustausch. Mit einem Temperatur-Tiefenprofil kann der geothermische Gradient und dessen Variation mit der Tiefe gemessen werden. Da beim Einsatz von Erdwärmesonden der Wärmeaustausch zwischen Erdwärmesonde und dem umgebenden Erdreich direkt von der Wärmeleitfähigkeit des Untergrundes am Standort abhängt, kann durch eine genaue Bestimmung der Wärmeleitfähigkeit des Untergrundes schnell eine Aussage über die spezifische Entzugsleistung (Watt pro Meter Bohrlänge) und über die notwendige Anordnung und Tiefe der Erdwärmesondenanlage getroffen werden.

Temperatur-Tiefenprofile wurden bisher mit kabelgebundenen Bohrlochmesssonden im offenen Bohrloch erstellt. Dabei kann jedoch sowohl aus Kostengründen wie auch aus Bohrlochstabilitätsgründen die Bohrlochabkühlung meist nicht abgewartet werden, womit systematische Messfehler entstehen. Ferner weist ein Bohrloch, das beispielsweise für die Einführung einer Erdwärmesonde vorgesehen ist, einen größeren Durchmesser auf (häufig 135 mm), so dass interne Zirkulationen der Bohrlochflüssigkeit im Bohrloch möglich sind und das Messergebnis verfälschen. Ferner ist bei der herkömmlichen kabelgebundenen Bohrlochmesstechnik problematisch, dass schwache Messsignale von elektromagnetisch eingestreuten Störsignalen überdeckt werden. Folglich kann eine hohe Messauflösung bei der Temperaturmessung nicht oder nur mit erheblichem Aufwand erreicht werden.

Um für die Temperaturmessung die Bohrlochabkühlung kostengünstig abwarten zu können, ist daher eine Messung innerhalb der Erdwärmesonde, also in dem Bohrlochwärmetauscher vorzuziehen. Da sich jedoch beim Einbau die U-förmigen Erdwärmesonden üblicherweise spiralförmig verdrehen, ist eine Messung mit einer kabelgebundenen Bohrlochsonde in größeren Tiefen nicht möglich. Bereits ab 60 m Tiefe erhöht sich beim Aufholen der Bohrlochsonde die Reibungskraft zwischen Kabel und Erdwärmesondenwandung, an dem das Kabel zwangsläufig durch die spiralförmige Anordnung der Verrohrung anliegt, so stark, dass das Messgerät nicht mehr aufgeholt werden kann, es also quasi verseilt.

Demgemäß wurde ein Messverfahren zur Bestimmung der Wärmeleitfähigkeit des Untergrundes in "Thermal response test - Experiences in Germany", Burkhard Sanner et al. 2000 beschrieben, bei dem in einem Pumptest eine vorgegebene Wärmemenge in den Bohrlochwärmetauscher (Erdwärmesonde) eingebracht wird und die daraus resultierenden Temperaturänderungen der zirkulierenden Flüssigkeit gemessen werden. Dabei wird das Sondenfluid (z. B. Wasser) mit einer konstanten Umwälzrate durch die U-Rohre der Sonde zirkuliert und kontinuierlich mit einer konstanten Heizleistung erwärmt. Die Temperatur am Sondenaustritt hängt von der Wärmeleitfähigkeit des Untergrundes ab. Aus dem zeitlichen Verlauf des Mittelwerts aus Eintritts- und Austrittstemperatur kann die Wärmeleitfähigkeit des Untergrundes bestimmt werden. Der Auswertung von Thermal response tests, kurz TRT, liegt die sog. Kelvin'sche Linienquellentheorie und eine Vielzahl von Modellvereinfachungen zugrunde, welche die Genauigkeit der berechneten Wärmeleitfähigkeit sehr einschränken. Als Folge der Auswertungsmethode ist die berechnete Wärmeleitfähigkeit ein für die gesamte Länge der Erdwärmesonde repräsentativer Wert, der möglicherweise durch advektiven Wärmetransport durch Grundwasserströmung erheblich beeinflusst werden kann und so zu verfälschten Prognosewerten führt.

Zu den wichtigsten Annahmen und Einschränkungen des klassischen TRT gehören:
1. Homogene Materialeigenschaften des Untergrundes
2. Konstante Temperatur des Untergrundes
3. Konstante Heizleistung der Sonde
4. Sonde als Linienquelle.

Damit die Materialeigenschaften der Sonde und die Hinterfüllung im Bohrloch das Ergebnis des TRT nicht beeinflussen, wird eine TRT-Mindestdauer von etwa 100 h - 200 h empfohlen.

Ein ähnliches Verfahren und Vorrichtung zur Bestimmung der Wärmeleitfähigkeit des Untergrundes ist aus der JP 2003-004680 A bekannt. Demgemäß wird Wasser mit höheren Temperaturen als die Temperaturen im Untergrund im Wärmetauscherrohr (Wärmesonde) zirkuliert. Dabei weist die Vorrichtung eine Zirkulationsleitung mit einer überirdischen Wärmequelle, einer Pumpe, einem Durchflussmesser, einem Temperatursensor für die Wassertemperatur am Eintritt und je einem Temperaturmesser für die Wassertemperatur am Eintritt und am Austritt sowie einer Vielzahl von Temperaturmesssensoren, die in einer vertikalen Verteilung am Wärmetauscherrohr (Wärmesonde) angeordnet sind, auf.

Aus der DE 10 2004 026 381 B8 ist eine kabellose Messvorrichtung und ein diesbezügliches Messverfahren bekannt, mit dem bzw. mit der eine hochauflösende Messung der Temperatur des Sondenfluids in einer Erdwärmesonde innerhalb kurzer Zeit und mit geringem Aufwand möglich ist. Das damit gemessene Temperaturprofil innerhalb der Erdwärmesonde kann jedoch noch keine unmittelbaren Rückschlüsse auf die vertikalen Variationen der Wärmeleitfähigkeit im Untergrund und/oder etwaigen Grundwasserströmungen geben.

Aufgabe der Erfindung ist es daher, durch ein geeignetes Messverfahren in einer Bohrung, insbesondere in einer Erdwärmesonde, temperaturrelevante Parameter, nämlich Wärmeleitfähigkeit und/oder Massentransport und ihre vertikale Veränderung ermitteln zu können.

Gelöst wird diese Aufgabe mit einem Verfahren gemäß Anspruch 1.

Durch die Schritte Messung des ungestörten Temperaturprofils T1(z) als Funktion der Tiefe, Injektion von Wärme in den Untergrund durch Zirkulieren eines erwärmten Fluids in der Bohrung, Regeneration der Bodentemperatur über einen vorgegebenen Zeitraum, Messung des regenerierten Temperaturprofils T2(z) als Funktion der Tiefe und Simulation an einem Modell entsprechender numerisch berechneter Temperaturprofile T1n(z) für "ungestörte" Temperaturprofile und T2n(z) für "regenerierte" Temperaturprofile unter Zugrundelegung verschiedener theoretischer Untergrundparameter, die mit Hilfe inverser numerischer Verfahren den gemessenen Temperaturprofilen T1(z) und T2(z) angeglichen werden, womit ein berechnetes Profil wahrscheinlicher Untergrundparameter ermittelt wird, wird ein Insitu-Verfahren zur Bestimmung der vertikalen Variation der Wärmeleitfähigkeit angegeben. Durch die Auswertung von vertikalen Temperaturprofilen, nämlich einem ungestörten Temperaturprofil vor Wärmeeintrag und einem regenerierten Temperaturprofil nach Wärmeeintrag, kann die vertikale Variation des radialen Wärmestroms analysiert werden. Daraus können Temperatur relvante Parameter, insbesondere Wärmeleitfähigkeit und ggf. Massentransport, in ihrer vertikalen Verteilung berechnet werden.

Da aus diesen beiden Temperaturprofilen eine analytisch eindeutige Berechnung der zu ermittelnden Untergrundparameter nicht möglich ist, wird eine numerische Modellierung mit verschiedenen theoretischen Untergrundparametern durchgeführt, die mit Hilfe inverser numerischer Verfahren an die gemessenen Temperaturenprofile angeglichen werden, so dass das bestpassende Modell die wahrscheinlichen Untergrundparameter wiedergibt.

Im Gegensatz zur bekannten TRT-Methode, bei der lediglich ein integraler Wert für die Wärmeleitfähigkeit ermittelt werden kann, kann somit ein vertikales Profil der Wärmeleitfähigkeit im Untergrund in Abhängigkeit der Tiefe ermittelt werden. Entsprechend können aus den tiefenabhängigen Werten genauere Vorhersagen über die Wärmeproduktivität der erstellten Bohrung mit Erdwärmesonde getroffen werden.

Im Gegensatz zur bekannten TRT-Methode beträgt die Zirkulationsdauer des Fluids während der Wärmeinjektion lediglich 12 h bis 96 h. Dabei hat sich gezeigt, dass insbesondere eine Zirkulationsdauer von 24 h bis 48 h ausreicht, um einen auswertbaren Wärmeeintrag in den Untergrund zu erreichen. Beispielsweise konnte eine Temperaturerhöhung von fast 10° C in der Bohrung nach einer 2-tägigen Wärmeinjektion als für die zu beobachtenden Effekte ausreichend festgestellt werden.

Dadurch, dass der vorgegebene Zeitraum zur Regeneration der Bodentemperatur 12 h bis 96 h, insbesondere 24 h bis 48 h beträgt, wird auch für die Regeneration ein überschaubarer Zeitraum vorgegeben. Bereits nach 24 h Regenerationszeit ist der gewünschte Wärmetransport in Abhängigkeit insbesondere der Wärmeleitfähigkeit des Untergrundes in den zu messenden Temperaturprofilen sichtbar und ausreichend für eine Auswertung. Insgesamt kann somit der Messzeitraum, der für einen vollständigen Messzyklus erforderlich ist, auf deutlich unter 100 h, beispielsweise 72 h reduziert werden. Dies ist gegenüber der im Stand der Technik bekannten TRT-Methode, die einen Messzeitraum von 100 h bis 200 h benötigt, eine deutliche Reduzierung. Aus dieser Zeitersparnis können somit Arbeitszeitkosten, Gerätebereitstellungskosten sowie Energiekosten für die Wärmeinjektion gespart werden.

Bevorzugt wird als Modell ein drei-dimensionales Finite-Elemente-Modell verwendet wird. Dabei wird ein um die Erdwärmesonden zentriertes Gitter für das Finite-Elemente-Modell verwendet. Mit einem derart zentrierten Finiten-Elemente-Modell kann eine Simulation des Wärmetransports im Untergrund von den Erdwärmesonden radial in den Untergrund leicht simuliert werden. Da die Gewichtung der Untergrundparameter mit radialem Abstand vom Bohrloch abnimmt, kann damit die Größe der Finiten-Elemente mit zunehmenden radialen Abstand vom Zentrum der Bohrung zunehmen.

Da die thermischen Eigenschaften der im Bohrloch eingefügten Elemente, nämlich des Erdwärmesondenrohres, des Erdwärmesondenfluids und des Bohrlochfüllmaterials bekannt sind, können die diesbezüglichen Werte als Randbedingungen bei der Modellrechnung berücksichtigt werden. Dabei sollten die Finiten-Elemente so abgestimmt sein, dass sie in ihrer räumlichen Ausdehnung die entsprechenden Materialien widerspiegeln.

Wenn für eine Vielzahl von Modellen mit unterschiedlichen Parametern jeweilige Temperaturprofile T1n(z) und T2n(z) berechnet werden, die mit Hilfe einer Monte-Carlo-Simulation mit den gemessenen Temperaturprofilen T1 (z) und T2(z) verglichen und daraus die wahrscheinlichsten Untergrundparameter approximiert werden, kann ein Tiefenprofil der zu ermittelnden Untergrundparameter in einem Nährungsverfahren ermittelt werden. Dabei brauchen bei der Monte-Carlo-Simulation keine verlässlichen Randwerte angegeben werden. Die Variation der möglichen Untergrundparameter muss dabei jedoch so breit gewählt werden, dass alle möglichen Konstellationen durchgespielt werden können. Entsprechend hoch ist dann der Rechenaufwand. Bevorzugt beinhalten die unterschiedlichen Parameter für die Modelle verschiedene Wärmeleitfähigkeitsprofile und/oder Tiefenprofile der spezifischen Wärmekapazität, wobei die Approximation das wahrscheinlichste Wärmeleitfähigkeitstiefenprofil als Ergebnis liefert. Damit kann mit der Monte-Carlo-Simulation ein Wärmeleitfähigkeitstiefenprofil zuverlässig ermittelt werden.

Um eine weitere Eingrenzung für die Parametervariation bei der Monte-Carlo-Simulation zu liefern, werden an Bohrkernen und/oder Bohrklein aus der Bohrung die Wärmeleitfähigkeit und/oder die spezifische Wärmekapazität gemessen und aus diesen Werten Randbedingungen für die Modelle, insbesondere für die unterschiedlichen Wärmeleitfähigkeitstiefenprofile abgeleitet. Damit kann die Treffsicherheit der Simulation erhöht und/oder der Rechenaufwand, d.h. die Anzahl der Simulationen, verringert werden.

Wenn die Temperaturprofile T1(z) und T2(z) mit einer kabellosen Messvorrichtung, bevorzugt in äquidistanten Tiefenintervallen, gemessen werden, ist eine Vorhaltung von aufwändiger Bohrlochmesstechnik mit Kabelwindenwagen und dergleichen nicht erforderlich. Entsprechend kostengünstig ist die Messung. Ferner kann ab Tiefen von ca. 60 m in Erdwärmesonden kein Messprofil mit kabelgebundenen Messsonden aufgenommen werden, da sich das Messkabel in der im Bohrloch verdrehten Erdwärmesonde verseilt, wie dies bereits eingangs beschrieben ist. Mit der kabellosen Messvorrichtung können somit bei geringem Aufwand die beiden erforderlichen Temperatur-tiefenprofile aufgenommen werden. Aufgrund der einfachen Messapparatur besteht somit ein erheblicher Kostenvorteil.

Nachfolgend wird an einem theoretischen Untergrundmodell (Referenzmodell) die erfindungsgemäße Messmethode mit der Modellsimulation anhand der beiliegenden Zeichnungen erläutert.

Darin zeigt:
- Fig. 1: in einer Radialebene zur Bohrlochachse das Gitter der Finiten-Elemente für die Modellrechnungen,
- Fig. 2: ein Temperatur-Tiefen-Diagramm mit Temperaturtiefenprofilen zu verschiedenen Phasen der anmeldungsgemäßen Messmethode,
- Fig. 3: das in Fig. 2 dargestellte Diagramm mit invers numerischer Approximation der gemessenen Temperaturtiefenprofile und
- Fig. 4: die Wärmeleitfähigkeiten aus 2000 berechneten Monte-Carlo-Modellen für die vier Schichten.

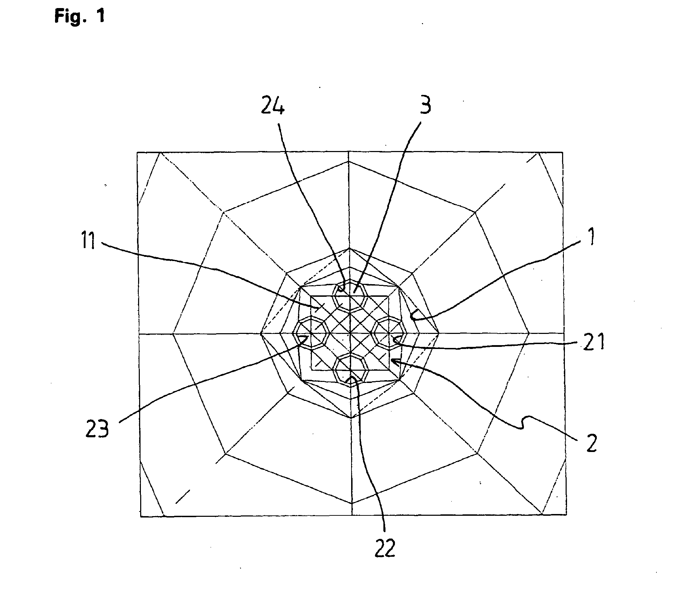

Es wurde ein synthetischer TRT-Datensatz unter Verwendung eines Finiten-Elemente-Modells erzeugt. In Fig. 1 ist in Radialebene zur Bohrachse das Gitter der Finiten-Elemente in einem Bohrloch 1 und seiner Umgebung dargestellt. Im Bereich der Bohrung 1 sind vier Rohre 21, 22, 23, 24 einer Erdwärmesonde 2, einem Bohrlochwärmetauscher nach dem Doppel-U-Typ, dargestellt. Das Gitter der Finiten-Elemente bilden die Erdwärmesonden-Rohre 21, 22, 23 und 24 exakt ab. Die Bohrung 1 und damit die darin eingeführte doppel-U-förmige Erdwärmesonde 2 hat einen Gesamtlänge (Tiefe) von 100 m. Die vier Erdwärmesonden-Rohre 21 bis 24 weisen einen inneren Durchmesser von 3,14 cm, die Bohrung 1 einen Durchmesser von 14,8 cm auf. In bekannter Weise ist der Doppel-U-Rohr-Bohrlochwärmetauscher 2 in das fertig gestellte Bohrloch 1 eingeführt und anschließend sofort mit Füllmaterial 11 verfüllt worden. Die nachfolgende Tabelle 1 fasst die verschiedenen thermischen Materialeigenschaften der in der Bohrung 1 eingebrachten Erdwärmesonde 2 zusammen.

**Tabelle 1**

| Material | Wärmeleitfähigkeit [W m⁻¹ K⁻¹] | spez. Wärmekapazität [MJ m⁻³ K⁻¹] |
|---|---|---|
| Erdwärmesonde 2 (HDPE) | 0.4 | 2.2 |
| Füllmaterial 11 | 2.0 | 2.2 |
| Erdwärmesonden-Fluid | 0.6 | 4.2 |

Die Modellrechnung wird an einem Untergrundmodell mit vier horizontal orientierten Schichten mit verschiedenen thermischen Eigenschaften gemäß Tabelle 2 errechnet. Dieses Untergrundmodell repräsentiert einen Testort als Referenzmodell.

**Tabelle 2**

| Tiefe | Wärmeleitfähigkeit | spez. Wärmekapazität |
|---|---|---|
| z [m] | λ [W m⁻¹ K⁻¹] | ρ·c [MJ m⁻³ K⁻¹] |
| 0m-25m | 1.5 | 2.2 |
| 25m-50m | 2.0 | 2.2 |
| 50m-75m | 3.5 | 2.2 |
| 75m-100m | 2.0 | 2.2 |
| 100m-125m | 2.5 | 2.2 |
| 125m-1000m | 3.0 | 2.2 |

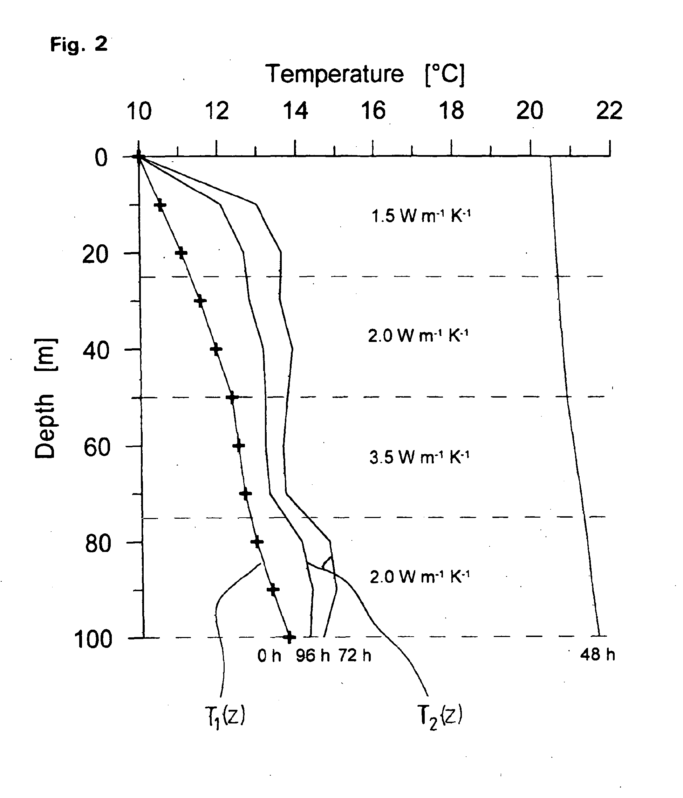

Im Gegensatz zur bekannten TRT-Methode beträgt die Dauer der Wärmeinjektion durch Zirkulieren des kontinuierlich erwärmten Fluids lediglich 48 h. Dabei wird die Fluidtemperatur innerhalb eines der aufwärts durchströmten Erdwärmesonden-Rohre 22 oder 24 in Tiefenintervallen von 10 m vor und nach der Fluidzirkulation aufgezeichnet. Das vor der Fluidzirkulation aufgezeichnete Temperaturprofil entspricht dem ungestörten Temperaturprofil T1 (z), wie dies in Fig. 2 mit den zehn Messkreuzen und der Bezeichnung "O h" dargestellt ist. Als Referenzwert wird ein Temperatur-tiefenprofil unmittelbar nach Beendigung der Fluidzirkulation aufgezeichnet.

In Fig. 2 ist dies die im Diagramm rechts dargestellte Funktion mit der Bezeichnung "48 h". Nachfolgend wird die im Modell ermittelte Temperaturkurve nach einer Regenerationsdauer von 24 h, also Gesamtexperimentdauer und Bezeichnung der Kurve mit "72 h" und 48 h Regenerationsdauer, also Gesamtdauer 96 h entsprechend Bezeichnung "96 h" aufgetragen.

Unter den gemäß Tabelle 2 vorgegebenen thermischen Untergrundeigenschaften ergibt sich somit die numerische Simulation für verschiedene Temperaturtiefenprofile. Der Anstieg der Wärmeleitfähigkeit ab 50 m Tiefe in der die ungestörte Untergrundtemperatur im Bohrloch repräsentierenden mit zehn Kreuzen und der Bezeichnung "O h" versehene Temperaturkurve spiegelt sich in einer Verringerung des Temperaturgradienten wider. Nach 48 h Wärmeinjektion entsprechend der in Fig. 2 rechts dargestellten Temperaturkurve mit der Bezeichnung "48 h" ist der Temperaturgradient relativ klein und im Wesentlichen konstant über die gesamte Länge der Erdwärmesonde. Die mit "72 h" bezeichnete Temperaturkurve berücksichtigt eine Wärmeregeneration nach Abwarten eines Zeitraums von 24 h nach Beendigung der Wärmeinjektion. Die Temperaturkurve mit der Bezeichnung "96 h" berücksichtigt einen zweitägigen Regenerationszeitraum. In diesen beiden Temperaturkurven wird der Wärmeleitfähigkeitskontrast wiederum sichtbar. Dabei ist in der Temperaturregenerationsphase ein Hauptvorteil des neuen Messverfahrens erkennbar, da die verschiedenen thermischen Gesteinseigenschaften im gemessenen Temperatur-Tiefensignal signifikant unterschiedbar werden.

Nach dem Ausführungsbeispiel der Erfindung wird nun das Referenzmodell mit den thermischen Gesteinseigenschaften unter Verwendung einer Monte-Carlo-Simulation ermittelt. Eine große Anzahl von Modellen mit verschiedenen thermischen Untergrundeigenschaften werden unter Zugrundelegung der Grenzbedingungen des Referenzmodells simuliert. Dabei werden die thermischen Untergrundeigenschaften der jeweiligen Monte-Carlo-Modelle statistisch variiert. Wird in einzelnen Abschnitten des Untergrundes Grundwasserströmung vermutet, kann im Monte-Carlo-Modell zusätzlich konvektiver Wärmetransport durch Vorgabe einer Grundwasserströmungsgeschwindigkeit berücksichtigt werden. Die Temperaturkurven jedes Modells werden mit den Temperaturkurven des Referenzmodells verglichen. Ein Gauß'sches Temperaturstörsignal mit einer Standardabweichung von +/- 0,1 °C wird zu allen Temperaturdaten addiert. Die vier Temperaturprofile bestehen aus jeweils zehn Einzeltemperaturmessungen, was zu einem Temperaturrestfehler von 4 x 10 x 0,01² K² = 0,4 K² führt. Das Modell der Monte-Carlo-Simulation, das am besten zu den Referenzdaten passt, sollte demnach wenigstens einen Restfehler von 0,4 K² haben.

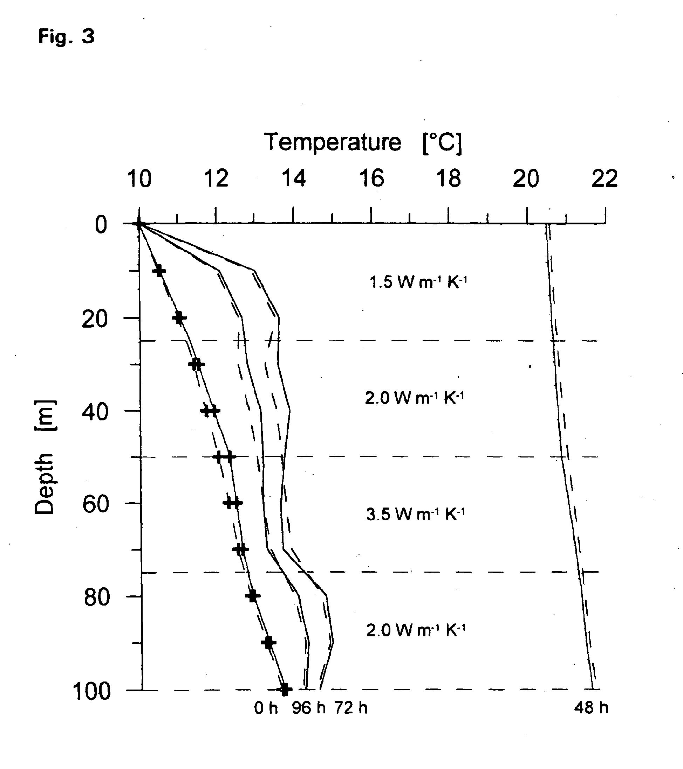

Um den Rechenaufwand einzugrenzen, wurden lediglich 2000 Monte-Carlo-Simulationen durchgeführt. Die Temperaturabweichungen in Bezug auf die Referenzdaten wurden für jedes Monte-Carlo-Modell berechnet. Das Modell mit der kleinsten Abweichung wurde als Modell angesehen, das die ursprünglichen thermischen Untergrundeigenschaften am besten wiedergibt. Die Temperaturdaten des bestpassenden Modells sind in Fig. 3 in gestrichelten Temperaturprofilen neben den Temperaturprofilen des Referenzmodells gemäß Fig. 2 wiedergegeben. Dieses passendste Modell hat einen Restfehler von 0,98 K², der deutlich oberhalb des Störpegels von 0,4 K² liegt. Die Wärmeleitfähigkeiten dieses bestpassenden Modells sind in Tabelle 3 zusammengefasst.

**Tabelle 3**

| Tiefe | Wärmeleitfähigkeit | spez. Wärmekapazität |
|---|---|---|
| z [m] | λ_{Ref} [W m⁻¹ K⁻¹] | λ_{MC} [W m⁻¹ K⁻¹] |
| 0m-25m | 1.5 | 1.64 |
| 25m-50m | 2.0 | 2.49 |
| 50m-75m | 3.5 | 3.28 |
| 75m-100m | 2.0 | 2.03 |
| 100m-125m | 2.5 | - |
| 125m-1000m | 3.0 | - |

Die Ergebnisse zeigen, das die Monte-Carlo-Simuation geeignet ist, die tatsächlichen thermischen Untergrundeigenschaften des Referenzmodells aufzuzeigen. Die einzige signifikante Differenz zwischen den Regenerations-Temperaturprofilen des Referenzmodells ("96 h" und "72 h") und den diesbezüglichen Temperaturprofilen aus dem passendsten Monte-Carlo-Modell sind in der zweiten Schicht zwischen 25 und 50 m Tiefe sichtbar. Eine bessere Approximation kann durch Erhöhen der Simulationsrechnungen erreicht werden. Im vorliegenden Beispiel sind 2000 Simulationen für vier Schichten entsprechend 2000^{1/4} ≈ 7 unabhängige Werte für die Wärmeleitfähigkeit für jede Schicht durchgeführt worden.

Wenn angenommen wird, dass die Wärmeleitfähigkeit zwischen 1 und 4 W m⁻¹ K⁻¹ liegt, führt dies zu einer durchschnittlichen Auflösung von 0,4 W m⁻¹ K⁻¹ für jede Schicht. Die Auflösung kann verbessert werden, wenn der Bereich möglicher Wärmeleitfähigkeitswerte durch Labormessungen weiter eingegrenzt werden kann. Ebenfalls kann eine bessere Auflösung durch Vergrößern der Anzahl der Monte-Carlo-Simulationen erreicht werden. Entsprechend würde die Gesamtsimulationszeit linear mit der Anzahl der Simulationsläufe wachsen. Für das vorliegende Ausführungsbeispiel betrug die Rechenzeit für die 2000 Simulationen bereits mehr als fünf Tage.

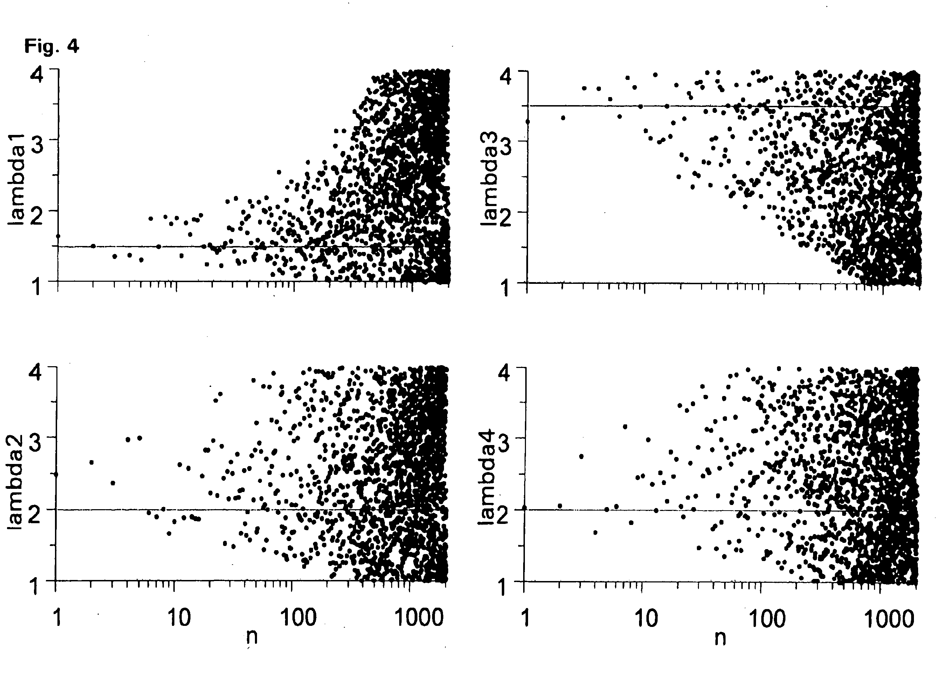

Die Einmaligkeit des bestpassenden Modells wird in Fig. 4 dargestellt. In den vier Diagrammen ist für die jeweilige Schicht des Referenzmodells die Wärmeleitfähigkeit aller Monte-Carlo-Simulationen mit einem Punkt in dem Diagramm eingetragen. Die Ergebnisse sind entsprechend ihrer ansteigenden Restfehler von links nach rechts sortiert. Entsprechend sind die besten Modelle am linken Rand der jeweiligen Diagramme wiedergegeben.

Diese Modellrechnungen haben gezeigt, dass die Monte-Carlo eine geeignete Methode zur invers numerischen Ermittlung eines Untergrundparameterprofils ist. Die für die Auswertung echter Daten erforderlichen Temperaturprofile können kostengünstig und bevorzugt in den Rohren der Bohrlochwärmetauscher (Erdwärmesonden) mittels kabelloser Messsonden gemäß DE 10 2004 026 381 B8 erfasst werden. Die Kombination der bekannten kabellosen Temperaturmessung in Erdwärmesonden und die numerische Simulation der gemessenen Temperaturprofile erlaubt eine Bestimmung der vertikalen Variationen der Wärmeleitfähigkeit im Untergrund und liefert somit eine bessere Abschätzung der zu erwartenden Erdwärmesondenleistung.

### Bezugszeichenliste

- 1: Bohrung, Bohrloch
- 11: Füllmaterial

- 2: Erdwärmesonde
- 21: Erdwärmesonden-Rohr
- 22: Erdwärmesonden-Rohr
- 23: Erdwärmesonden-Rohr
- 24: Erdwärmesonden-Rohr

- 3: (Erdwärmesonden-/Bohrloch-)Fluid

- T1 (z): ungestörtes Temperaturprofil
- T2 (z): regeneriertes Temperaturprofil

## Patentansprüche

1. Verfahren zur Bestimmung vertikaler Variationen der Wärmeleitfähigkeit im Untergrund in Bohrungen, insbesondere in Erdwärmesonden, **gekennzeichnet durch** die Schritte
- Messung des ungestörten Temperaturprofils T1 (z) als Funktion der Tiefe,
- Injektion von Wärme in den Untergrund **durch** Zirkulieren eines erwärmten Fluids in der Bohrung,
- Regeneration der Bodentemperatur über einen vorgegebenen Zeitraum,
- Messung des regenerierten Temperaturprofils T2(z) als Funktion der Tiefe,
- Simulation an einem Modell entsprechender numerisch berechneter Temperaturprofile T1ₙ(z) für "ungestörte" Temperaturprofile und T2ₙ(z) für "regenerierte" Temperaturprofile unter Zugrundelegung verschiedener theoretischer Untergrundparameter, die mit Hilfe inverser numerischer Verfahren den gemessenen Temperaturprofilen T1(z) und T2(z) angeglichen werden, womit ein berechnetes Profil wahrscheinlicher Untergrundparameter ermittelt wird.

2. Verfahren nach Anspruch 1, **dadurch gekennzeichnet, dass** die Zirkulationsdauer des Fluids während der Wärmeinjektion 12 h bis 96 h, insbesondere 24 h bis 48 h beträgt.

3. Verfahren nach Anspruch 1 oder 2, **dadurch gekennzeichnet, dass** der vorgegebene Zeitraum zur Regeneration der Bodentemperatur 12 h bis 96 h, insbesondere 24 h bis 48 h beträgt.

4. Verfahren nach Anspruch 1, 2 oder 3, **dadurch gekennzeichnet, dass** als Modell ein drei-dimensionales Finite-Elemente-Modell verwendet wird.

5. Verfahren nach Anspruch 4, **dadurch gekennzeichnet, dass** ein um die Erdwärmesonden zentriertes Gitter für das Finite-Elemente-Modell verwendet wird.

6. Verfahren nach Anspruch 5, **dadurch gekennzeichnet, dass** für die Finiten Elemente, die das Erdwärmesonden-Rohr betreffen, eine Wärmeleitfähigkeit von 0,4 W m⁻¹ K⁻¹ und eine spezifische Wärmekapazität von 2,2 MJ m⁻³ K⁻¹ vorgegeben werden.

7. Verfahren nach Anspruch 5 oder 6, **dadurch gekennzeichnet, dass** für die Finiten Elemente, die das Erdwärmesonden-Fluid betreffen, eine Wärmeleitfähigkeit von 0,6 W m⁻¹ K⁻¹ und eine spezifische Wärmekapazität von 4,2 MJ m⁻³ K⁻¹ vorgegeben werden.

8. Verfahren nach Anspruch 5, 6 oder 7, **dadurch gekennzeichnet, dass** für die Finiten Elemente, die das Bohrlochfüllmaterial betreffen, eine Wärmeleitfähigkeit von 2,0 W m⁻¹ K⁻¹ und eine spezifische Wärmekapazität von 2,2 MJ m⁻³ K⁻¹ vorgegeben werden.

9. Verfahren nach einem der vorangehenden Ansprüche, **dadurch gekennzeichnet, dass** für eine Vielzahl von Modellen mit unterschiedlichen Parametern jeweilige Temperaturprofile T1ₙ(z) und T2ₙ(z) berechnet werden, die mit Hilfe einer Monte-Carlo-Simulation mit den gemessenen Temperaturprofilen T1(z) und T2(z) verglichen und daraus die wahrscheinlichsten Untergrundparameter approximiert werden.

10. Verfahren nach Anspruch 9, **dadurch gekennzeichnet, dass** die unterschiedlichen Parameter für die Modelle Wärmeleitfähigkeitsprofile und/oder Tiefenprofile der spezifischen Wärmekapazität beinhalten, wobei die Approximation das wahrscheinlichste Wärmeleitfähigkeitstiefenprofil als Ergebnis liefert.

11. Verfahren nach einem der vorangehenden Ansprüche, **dadurch gekennzeichnet, dass** an Bohrkernen und/oder Bohrklein aus der Bohrung die Wärmeleitfähigkeit und/oder die spezifische Wärmekapazität gemessen werden und aus diesen Werten Randbedingungen für die Modelle, insbesondere für die unterschiedlichen Wärmeleitfähigkeitstiefenprofile gemäß Anspruch 9, abgeleitet werden.

12. Verfahren nach einem der vorangehenden Ansprüche, **dadurch gekennzeichnet, dass** die Temperaturprofile T1(z) und T2(z) mit einer kabellosen Messvorrichtung, bevorzugt in äquidistanten Tiefenintervallen, gemessen werden.

## Claims

1. A method of determining vertical variations in thermal conductivity in the ground in bores, in particular in geothermal heat pumps, **characterized by** the steps:
- measurement of the undisturbed temperature profile **T1(z)** as a function of the depth,
- injection of heat into the ground by circulation of a heated fluid in the bore,
- regeneration of the soil temperature over a pre-determined period of time,
- measurement of the regenerated temperature profile **T2(z)** as a function of the depth,
- simulation on a model of corresponding numerically calculated temperature profiles **T1ₙ(z)** for 'undisturbed' temperature profiles and **T2ₙ(z)** for 'regenerated' temperature profiles whilst taking as a basis different theoretical ground parameters which are adapted to the measured temperature profiles **T1(z)** and **T2(z)** with the aid of inverse numerical methods, by means of which a calculated profile of probable ground parameters is determined.

2. A method according to Claim 1, **characterized in that** the circulation duration of the fluid during the heat injection amounts to from 12 h to 96 h, in particular from 24 h to 48 h.

3. A method according to Claim 1 or 2, **characterized in that** the pre-determined period of time for the regeneration of the soil temperature amounts to from 12 h to 96 h, in particular from 24 h to 48 h.

4. A method according to Claim 1, 2 or 3, **characterized in that** a three-dimensional finite-element model is used as the model.

5. A method according to Claim 4, **characterized in that** a grid centred around the geothermal heat pumps is used for the finite-element model.

6. A method according to Claim 5, **characterized in that** a thermal conductivity of 0·4 W m⁻¹ K⁻¹ and a specific thermal capacity of 2.2 MJ m⁻³ K⁻¹ are pre-set for the finite elements which relate to the geothermal-heat-pump pipe.

7. A method according to Claim 5 or 6, **characterized in that** a thermal conductivity of 0·6 W m⁻¹ K⁻¹ and a specific thermal capacity of 4.2 MJ m⁻³ K⁻¹ are pre-set for the finite elements which relate to the geothermal-heat-pump fluid.

8. A method according to Claim 5, 6 or 7, **characterized in that** a thermal conductivity of 2.0 W m⁻¹ K⁻¹ and a specific thermal capacity of 2.2 MJ m⁻³ K⁻¹ are pre-set for the finite elements which relate to the filling material of the borehole.

9. A method according to any one of the preceding Claims, **characterized in that** respective temperature profiles **T1ₙ(z)** and **T2ₙ(z)** are calculated for a plurality of models with different parameters, the temperature profiles **T1n(z)** and **T2ₙ(z)** being compared with the measured temperature profiles **T1(z)** and **T2(z)** with the aid of a Monte Carlo simulation, and the most probable ground parameters are approximated therefrom.

10. A method according to Claim 9, **characterized in that** the different parameters for the models comprise thermal-conductivity profiles and/or depth profiles of the specific thermal capacity, wherein the approximation delivers the most probable thermal-conductivity depth profile as a result.

11. A method according to any one of the preceding Claims, **characterized in that** the thermal conductivity and/or the specific thermal capacity is or are measured on drilling cores and/or drilling cuttings, and marginal conditions for the models are deduced from the said values, in particular for the different thermal-conductivity depth profiles according to Claim 9.

12. A method according to any one of the preceding Claims, **characterized in that** the temperature profiles **T1(z)** and **T2(z)** are measured with a cable-less measuring apparatus, preferably at equidistant depth intervals.

## Revendications

1. Procédé de détermination des variations verticales de la conductivité thermique dans le sous-sol dans des trous de forage, en particulier dans des sondes géothermiques, **caractérisé par** les étapes
- mesure du profil de température T1 (z) non troublé en fonction de la profondeur,
- injection de chaleur dans le sous-sol par la circulation d'un fluide chauffé dans le trou de forage,
- régénération de la température du sol pendant un intervalle de temps prédéfini,
- mesure du profil de température T2(z) régénéré en fonction de la profondeur,
- simulation sur un modèle de profils de température T1ₙ(z) correspondants calculés numériquement pour des profils de température « non troublés », et T2ₙ(z) pour des profils de température « régénérés » sur la base de différents paramètres théoriques du sous-sol qui sont ajustés aux profils de température T1 (z) et T2(z) mesurés au moyen de procédés numériques inverses, à l'aide de quoi on détermine un profil calculé des paramètres probables du sous-sol.

2. Procédé selon la revendication 1, **caractérisé en ce que** la durée de circulation du fluide pendant l'injection de chaleur est comprise entre 12 h et 96 h, en particulier entre 24 h et 48 h.

3. Procédé selon la revendication 1 ou 2, **caractérisé en ce que** l'intervalle de temps prédéfini pour la régénération de la température du sol est compris entre 12 h et 96 h, en particulier entre 24 h et 48 h.

4. Procédé selon la revendication 1, 2 ou 3, **caractérisé en ce que** le modèle utilisé est un modèle d'éléments finis tridimensionnel.

5. Procédé selon la revendication 4, **caractérisé en ce que** pour le modèle d'éléments finis on utilise une grille centrée autour des sondes géothermiques.

6. Procédé selon la revendication 5, **caractérisé en ce que** pour les éléments finis qui concernent le tube des sondes géothermiques, on définit une conductivité thermique de 0,4 W m⁻¹ K⁻¹ et une capacité thermique spécifique de 2,2 MJ m⁻³ K⁻¹.

7. Procédé selon la revendication 5 ou 6, **caractérisé en ce que** pour les éléments finis qui concernent le fluide des sondes géothermiques, on définit une conductivité thermique de 0,6 W m⁻¹ K⁻¹ et une capacité thermique spécifique de 4,2 MJ m⁻³ K⁻¹.

8. Procédé selon la revendication 5, 6 ou 7, **caractérisé en ce que** pour les éléments finis qui concernent le matériau de remplissage du trou de forage, on définit une conductivité thermique de 2,0 W m⁻¹ K⁻¹ et une capacité thermique spécifique de 2,2 MJ m⁻³ K⁻¹.

9. Procédé selon l'une des revendications précédentes, **caractérisé en ce que** pour une pluralité de modèles avec des paramètres différents on calcule les profils de température T1ₙ(z) et T2ₙ(z) respectifs qui sont comparés au moyen d'une simulation de Monte Carlo aux profils de température T1 (z) et T2(z) mesurés et, à partir de là, les paramètres du sous-sol les plus probables sont approchés par approximation.

10. Procédé selon la revendication 9, **caractérisé en ce que** les différents paramètres pour les modèles contiennent des profils de conductivité thermique et/ou des profils de profondeur de la capacité thermique spécifique, l'approximation fournissant comme résultat le profil le plus probable de la profondeur de la conductivité thermique.

11. Procédé selon l'une quelconque des revendications précédentes, **caractérisé en ce que** la conductivité thermique et/ou la capacité thermique spécifique sont mesurées sur les carottes de forage et/ou les déblais issus du trou de forage et les conditions limites pour les modèles sont dérivées à partir de ces valeurs, en particulier pour les différents profils de profondeur de la conductivité thermique selon la revendication 9.

12. Procédé selon l'une quelconque des revendications précédentes, **caractérisé en ce que** les profils de température T1 (z) et T2(z) sont mesurés avec un dispositif de mesure sans câble, de préférence à des intervalles de profondeur équidistants.
